# EUROPÄISCHE PATENTSCHRIFT

(11) **EP 3 973 774 B1**
(45) Veröffentlichungstag und Bekanntmachung des Hinweises auf die Patenterteilung: **07.06.2023**
(21) Anmeldenummer: 21181043.7
(22) Anmeldetag: 23.06.2021
(51) Int. Cl.: A01M 17/00

(54) **VORRICHTUNG ZUR VERTREIBUNG VON TIEREN**
DEVICE FOR REPELLING ANIMALS
DISPOSITIF PERMETTANT DE REPOUSSER LES ANIMAUX

(30) Priorität: 23.09.2020 DE 102020124806
(43) Veröffentlichungstag der Anmeldung: 30.03.2022
(73) Patentinhaber: Tevigo GmbH, 38159 Vechelde (DE)
(72) Erfinder: BASSE, Sandra, 38159 Vechelde (DE)
(74) Vertreter: Kramer Barske Schmidtchen Patentanwälte PartG mbB

(56) Entgegenhaltungen:
- KR-Y1- 200 462 211
- US-A- 2 763 991
- US-A- 3 303 800
- US-A- 5 870 852
- US-A1- 2012 066 961

## Beschreibung

Die vorliegende Erfindung betrifft eine Vorrichtung zum Vertreiben bzw. Vergrämen von Tieren, insbesondere von im Erdreich lebenden Insekten und Wühltieren.

Aus dem Stand der Technik sind Vorrichtungen zum Vertreiben bzw. Vergrämen von Wühltieren in Erdreich von Gärten und Feldern bekannt. Aus der DE 20 2014 002 306 U1 ist beispielsweise ein Erd-Injektor bekannt, der einen Behälter und einen Vorsatz aufweist. Der Behälter ist mit einem flüssigen Vergrämmittel zur Maulwurfs- und/oder Wühlmaus-Vergrämung befüllt und steht mit dem Vorsatz in Flüssigkeitsverbindung, wenn er im Erdreich angeordnet ist. Der Vorsatz verfügt über eine Tropfregulierung, die das flüssige Vergrämmittel tropfenweise in das Erdreich abgibt. Nach Abgabe des gesamten Vergrämmittels an das Erdreich verbleibt der Erd-Injektor in der Erde und verrottet dort. Zur weiteren Vertreibung von Wühltieren muss ein neuer Erd-Injektor in das Erdreich eingebracht werden. Bei dem aus der DE 20 2014 002 306 U1 bekannten Erd-Injektor muss demzufolge regelmäßig ein neuer Erd-Injektor in das Erdreich eingesetzt werden und zudem bei jedem Einsetzen eines neuen Erd-Injektors eine geeignete Stelle zum Einbringen des Erd-Injektors (wie beispielsweise ein unterirdischer Gang eines Wühltieres) ausfindig gemacht werden. Dies macht die Vergrämung mittels des bekannten Erd-Injektors zweitaufwändig und teuer. Weiterer Stand der Technik istbspw.: KR 200 462 211, US 5 870 852, US 2 763 991, US 3 303 800, US 2012/066961.

Es ist daher Aufgabe der vorliegenden Erfindung eine Vorrichtung zum Vertreiben bzw. Vergrämen von Tieren zu schaffen, die eine zeitsparendende und kostengünstige Vertreibung von Tieren, insbesondere von im Erdreich lebenden Tieren und Wühltieren, ermöglicht.

Die obige Aufgabe wird durch eine Vorrichtung zum Vertreiben bzw. Vergrämen von Tieren mit den Merkmalen nach Anspruch 1 gelöst. Bevorzugte Ausführungsformen sind in den Unteransprüchen angegeben.

Der Erfindung liegt der Gedanke zugrunde, eine zweiteilige Vorrichtung zum Vertreiben von Tieren, insbesondere im Erdreich lebenden Insekten, wie z.B. Ameisen, und Wühltieren, wie z.B. Maulwürfen, zu schaffen, bei der ein Teil der Vorrichtung als ein erster Körper einmalig fest in ein Erdreich eines Gartens, eines Feldes oder einer anderen Grünfläche eingeführt wird und ein zweiter Teil der Vorrichtung als ein zweiter Körper, der ein Vergrämmittel bzw. Vertreibungsmittel enthält bzw. aufnehmen kann, lösbar in dem ersten Körper der Vorrichtung angeordnet wird. Der erste Körper der Vorrichtung bildet somit eine Aufnahme für den zweiten Körper der Vorrichtung und wird einmalig an geeigneter Stelle in einem Erdreich, wie beispielsweise an oder in einem Wühltiergang, platziert. Dort kann der erste Teil der Vorrichtung so lange wie nötig, unabhängig von der Dauer der Wirksamkeit des Vergrämmittels, verbleiben. Der zweite Körper der Vorrichtung ist lösbar in dem ersten Körper der Vorrichtung angeordnet und ist somit im Gegensatz zu dem ersten Körper der Vorrichtung austauschbar ausgebildet. Somit kann der zweite Körper nach Aufbrauchen des Vertreibungsmittels oder wenn das Vertreibungsmittel vollständig genutzt wurde und keine Wirkung mehr entfaltet, dem ersten Körper entnommen werden, mit einem neuen Vertreibungsmittel befüllt werden und wieder in den ersten Körper eingesetzt werden, ohne dass die Vorrichtung insgesamt ausgetauscht werden muss. Es ist auch denkbar, das Vertreibungsmittel in den zweiten Körper einzubringen, ohne dass dieser dem ersten Körper entnommen wird.

Damit das Vertreibungsmittel in dem zweiten Körper durch den ersten Körper in das Erdreich gelangt, ist in zumindest dem zweiten Körper zumindest eine Öffnung, wie beispielsweise mindestens ein Loch vorgesehen. Die in dem zweiten Körper vorgesehene Öffnung ist bei Abgabe des Vertreibungsmittels in das Erdreich zumindest teilweise geöffnet. Dazu ist der erste Körper gegenüber dem zweiten Körper derart platziert, d.h. radial verdreht oder axial verschoben, dass der erste Körper das Loch in dem zweiten Körper nicht überdeckt und damit verschließt. Um zu vermeiden, dass beim Einbringen der Vorrichtung in das Erdreich Erde durch das Loch in das Innere des zweiten Köpers eindringt, können der erste Körper und der zweite Körper zueinander so in einer ersten Position positioniert werden, dass in dieser ersten Position der erste Körper und der zweite Körper so gegeneinander verdreht sind, dass der erste Körper das Loch des zweiten Körpers verschließt. Ist die Vorrichtung vollständig in das Erdreich eingeführt, wird der erste Körper gegenüber dem Loch des zweiten Körpers axial und/oder radial in eine zweite Position verschoben bzw. verdreht. Bei der zweiten Position ist das Loch des zweiten Körpers somit geöffnet, so dass eine von einer Innenseite des zweiten Körpers bis zu einer Außenseite des ersten Köpers durchgehende Öffnung entsteht, durch die das sich in dem zweiten Körper befindliche Vertreibungsmittel in das Erdreich austreten kann bzw. die gewünschten (Duft-)Stoffe des Vertreibungsmittels in ausreichendem Maß zur Vertreibung von Wühltieren austreten können. Eine axiale Verschiebung bezeichnet vorliegend eine Verschiebung in Längsrichtung des ersten bzw. des zweiten jeweils zylindrischen Körpers. Eine radiale Verdrehung bezeichnet vorliegend eine Verdrehung des zweiten Körpers gegenüber dem ersten Körper in einer Umfangsrichtung der Mantelfläche des ersten bzw. zweiten Körpers. Dazu sind der erste und der zweite Körper vorzugsweise zumindest teilweise kreiszylindrisch ausgebildet.

Um den ersten Körper gegenüber dem zweiten Körper auch in einem in ein Erdreich eingeführten Zustand, in dem z.B. mit bloßem Auge die Position der Körper zueinander nicht einfach erfasst werden kann, zuverlässig in der ersten bzw. zweiten Position positionieren zu können, ist die Vorrichtung mit mindestens einem Positionierungsmechanismus versehen. Der Positionierungsmechanismus zeigt einem Nutzer der Vorrichtung auch bei einem im Erdreich montierten bzw. in das Erdreich eingeführten Zustand der Vorrichtung, bei dem das wenigstens eine Loch des zweiten Körpers nicht mehr sichtbar sind, zuverlässig an, ob sich der zweite Körper gegenüber dem ersten Körper in der ersten Position oder in der zweiten Position befindet. Auf diese Art und Weise kann der zweite Körper zuverlässig während seiner Montage bzw. während des Einführens in das Erdreich in dem ersten Körper in der ersten Position gehalten werden und zum Abgeben des Vertreibungsmittels an das Erdreich in die zweite Position verdreht bzw. verschoben werden.

Zumindest der zweite Körper ist rohrförmig ausgebildet. Der erste Körper kann halbschalenförmig, spangenförmig oder ebenfalls rohrförmig ausgebildet sein, so dass er wenigstens einen Teil der Mantelfläche des zweiten Körpers umgeben kann. Vorzugsweise haben der erste und der zweite Körper einen wenigstens teilweise annähernd kreisrunden Querschnitt, d.h. sind wenigstens teilweise kreiszylindrisch ausgebildet. Der Außendurchmesser des zweiten Körpers, der in dem ersten Körper angeordnet ist, entspricht dabei vorzugsweise dem wenigstens teilweisen Innendurchmesser des ersten Körpers, so dass der zweite Körper ohne Zwischenraum zwischen dem ersten und dem zweiten Körper in dem ersten Körper angeordnet werden kann und in der ersten Position das wenigstens eine Loch des zweiten Körpers durch den ersten Körper verschlossen wird. Mit anderen Worten weist der erste Körper eine Form auf, die wenigstens teilweise der Mantelfläche des zweiten Körpers entspricht. Es sind jedoch auch andere Querschnittsformen des ersten und/oder des zweiten Körpers denkbar, wie oval, rechteckig oder quadratisch, so lange der erste Körper gegenüber dem zweiten Körper zumindest entweder radial verdreht oder axial verschoben werden kann. Ferner ist denkbar, dass auch der erste Körper wenigstens ein Loch aufweist, das in der zweiten Position mit dem Loch des zweiten Körpers fluchtet und dieses dadurch öffnet.

Das Vertreibungsmittel ist vorzugsweise ein Granulat, d.h. ein körniges Mittel. Alternativ kann das Vertreibungsmittel aber auch ein Feststoffmittel, ein gallertartiges oder gelartiges Mittel oder ein flüssiges Mittel sein. Das Vertreibungsmittel enthält bevorzugt einen Duftstoff, der von Wühltieren gemieden wird oder der den Geruchssinn von Wühltieren zumindest irritiert. Dadurch meiden Wühltiere die Stelle, an der die Vorrichtung im Erdreich platziert ist und an der das Duftmittel in das Erdreich abgegeben wird, und deren Umgebung.

Bevorzugter Weise ist der erste Körper ein rohrförmiger Körper, der wenigstens ein erstes Loch in seiner Mantelfläche aufweist, das Loch in dem zweiten Körper ist ein zweites Loch und bei der ersten Position der erste Körper zu dem zweiten Körper derart angeordnet ist, dass das erste Loch und das zweite Loch geschlossen sind, und bei der zweiten Position der erste Körper zu dem zweiten Körper gegenüber der ersten Position derart radial verdreht und/oder axial verschoben ist, dass das erste Loch und das zweite Loch fluchten.

Vorteilhafterweise enthalten der erste Körper und der zweite Körper jeweils mehrere Löcher. Dadurch kann das Vertreibungsmittel schneller und in verschiedene Richtungen in das Erdreich abgegebenen werden. Darüber hinaus bieten mehrere Löcher in sowohl dem ersten als auch dem zweiten Körper den Vorteil, dass das Vertreibungsmittel je nach Anwendungsfall oder Anwendungsort durch Ausrichten mehrerer oder weniger Löcher zueinander oder nur teilweiser Überdeckung der ersten und zweiten Löcher unterschiedlich dosiert werden kann. Dazu weist die Positionierungsvorrichtung geeignete Anzeigemittel auf, die dazu ausgebildet sind, einem Nutzer auch bei im Erdreich eingebrachter Vorrichtung den Öffnungsgrad der Löcher anzuzeigen, d.h. zum Beispiel wie viele Löcher des ersten Körpers bei welcher Drehung und/oder Verschiebung des zweiten Körpers gegenüber dem ersten Körper mit wie vielen Löchern des zweiten Körpers fluchten bzw. inwieweit sich die Löcher überdecken.

Vorzugsweise ist der Positionierungsmechanismus an einem jeweiligen Ende des ersten Körpers und des zweiten Körpers in Axialrichtung angeordnet. Dabei kann der Positionierungsmechanismus an dem Ende des ersten und zweiten Körpers angeordnet sein, der sich im Verwendungszustand im Erdreich befindet, oder kann an dem Ende des ersten und zweiten Körpers angeordnet sein, der sich im Verwendungszustand nahe der Erdoberfläche befindet. Ferner kann der Positionierungsmechanismus entweder an der der Stirnfläche und/oder an der Mantelfläche des jeweiligen Endes des ersten Körpers und des zweiten Körpers angeordnet sein.

Ist der Positionierungsmechanismus an den Enden (im Folgenden: entfernte Enden) des ersten und des zweiten Körpers angeordnet, die nach Einbringen der Vorrichtung in das Erdreich weiter von der Erdoberfläche entfernt liegen und sich damit im Erdreich befinden, ist es vorteilhaft, wenn der Positionierungsmechanismus einen Vorsprung an einer Innenseite der Mantelfläche des ersten Körpers und eine zu dem entfernten Ende offene Nut in der Mantelfläche des zweiten Körpers aufweist. Der Vorsprung an der Innenseite der Mantelfläche des ersten Körpers ist beispielsweise stiftförmig ausgebildet, kann aber auch jede andere geeignete Form zum Eingreifen in eine Nut aufweisen. Die Nut ist vorteilhafterweise L-förmig ausgebildet, so dass der Vorsprung bei Einführen des zweiten Körpers in den ersten Körper in den einen Schenkel des L in axialer Richtung der Körper hineingeschoben werden kann, so dass er in dem Übergang zu dem anderen Schenkel des L sitzt. Bei Verdrehung des zweiten Körpers gegenüber dem ersten Körper kann der Vorsprung in den anderen Schenkel des L hineingeschoben werden und arretiert so den zweiten Körper gegenüber dem ersten Körper in axialer Richtung. Vorzugsweise greift der Vorsprung an der Innenseite der Mantelfläche des ersten Körpers in der ersten Position somit derart in die Nut ein, dass der erste Körper zu dem zweiten Körper axial verschiebbar ist, und greift in der zweiten Position derart in die Nut ein, dass der erste Körper zu dem zweiten Körper nicht axial verschiebbar ist.

Ist der Positionierungsmechanismus an den Enden (im Folgenden: nahe Enden) des ersten und des zweiten Körpers angeordnet, die nach Einbringen der Vorrichtung in das Erdreich näher an der Erdoberfläche liegen oder gar aus der Erdoberfläche hervorstehen, kann der Positionierungsmechanismus einen Vorsprung an einer Innenseite der Mantelfläche des ersten Körpers oder an einer Außenseite der Mantelfläche des zweiten Körpers aufweisen. Je nachdem wo der Vorsprung ausgebildet ist, ist in diesem Fall an dem entsprechenden anderen aus dem nahen Ende des ersten und dem zweiten Körper eine Nut ausgebildet, die zu dem nahen Ende offen ist, z.B. L-förmig ausgebildet ist oder jede andere geeignete Form aufweist, und so ein Eingreifen des Vorsprungs an dem nahen Ende des jeweiligen ersten oder zweiten Körpers ermöglicht. Das Arretieren des zweiten Körpers gegenüber dem ersten Körper in axialer Richtung erfolgt auch in diesem Fall wie oben beschrieben. Als Alternative zu dem Vorsehen einer Nut und einem in die Nut eingreifenden Vorsprung können der erste und der zweite Körper auch eine Markierung, wie eine farbige Linie, farbige Punkte, etc., auf einer Stirnfläche (für eine radiale Verdrehung) und/oder einer Mantelfläche (für eine axiale Verschiebung) aufweisen, die beispielsweise bei fluchtender Anordnung einem Nutzer anzeigen, dass die Löcher des ersten Köpers mit den Löchern des zweiten Körpers fluchten. Bei mehreren Markierungen können auch Zwischenstufen zwischen gänzlich geschlossenen und gänzlich geöffneten Löchern angezeigt und entsprechend von einem Nutzer eingestellt werden, um die Dosierung des Vertreibungsmittels zu steuern. Das Anbringen des Positionierungsmechanismus an den nahen Enden hat den Vorteil, dass eine visuelle Überprüfung der Positionen des ersten und des zweiten Körpers zueinander möglich ist.

Der Positionierungsmechanismus kann auch mehrteilig gestaltet sein, z.B. dahingehend, dass an einem entfernten Ende ein (mechanischer) Positionierungsmechanismus wie z.B. der oben beschriebene vorgesehen ist und an einem nahen Ende eine zusätzliche Positionierungshilfe vorgesehen ist, z.B. in Form einer Markierung, die eine visuelle Überprüfung der Positionen der Körper zueinander, auch wenn diese in das Erdreich eingeführt sind, erlaubt.

Weiter ist es möglich, dass sich der Positionierungsmechanismus über einen wesentlichen Teil der Länge des ersten und zweiten Körpers erstreckt, so dass z.B. eine über die Axialerstreckung der Mantelfläche sich erstreckende Nut z.B. in der Mantelinnenfläche des ersten Körpers vorgesehen ist, die das Einführen des zweiten Körpers in den ersten Körper, z.B. mit Hilfe eines am zweiten Körper vorgesehenen Vorsprungs, führt, und eine in Umfangsrichtung verlaufende Nut in der Mantelinnenfläche des ersten Körpers in der Nähe des entfernten Endes vorgesehen ist, die ein Verdrehen der Körper zueinander führt, um die Öffnung der Löcher in den Mantelflächen der Körper zu überwachen.

Der zweite Körper weist vorteilhafterweise ein geschlossenes Ende auf und das wenigstens eine zweite Loch ist zu dem geschlossenen Ende des zweiten Körpers beabstandet, so dass der zweite Körper einen Bereich zum Aufnehmen von Vertreibungsmittel aufweist, der kein Loch aufweist. Wird das Vertreibungsmittel somit nur in den Bereich des zweiten Körpers eingefüllt, der kein Loch aufweist, kann mit dieser Ausgestaltung vor allem bei granulatförmigem, gelartigem oder flüssigem Vertreibungsmittel vermieden werden, dass das Vertreibungsmittel vor oder während des Einführens des zweiten Körpers in den ersten Körper durch die Löcher in dem zweiten Körper austritt. Bei einem Feststoff-Vertreibungsmittel oder einem granulatförmigen Vertreibungsmittel mit hinreichend großer Körnung hingegen kann sich das Vertreibungsmittel auch in Bereiche des zweiten Körpers erstrecken, die bereits mit Löchern versehen sind und es ist nicht erforderlich, die Löcher in dem zweiten Körper zu dem unteren Ende beanstandet anzuordnen. Im Falle eines Feststoff-Vertreibungsmittels oder eines granulatförmigen Vertreibungsmittels mit hinreichend großer Körnung muss der zweite Körper ferner auch kein geschlossenes Ende aufweisen, kann aber ein geschlossenes Ende aufweisen, solange das Vertreibungsmittel nicht durch die Bodenfläche durchtreten kann.

Um den zweiten Körper in dem ersten Körper nach dem vollständigen Einführen des ersten Körpers in den zweiten Körper drehen bzw. verschieben zu können, weist der zweite Körper vorzugsweise ein Betätigungselement zum Drehen und/oder Verschieben des zweiten Körpers in dem ersten Körper auf. Das Betätigungselement kann an dem nahen Ende des zweiten Körpers angeordnet sein, der nahe der Erdoberfläche liegt oder aus der Erdoberfläche hervorsteht bzw. hervorragt. Als Betätigungselement kommt beispielsweise ein Steg in Frage, der sich quer über die Öffnung an einem stirnseitigen Ende des zweiten Körpers erstreckt und per Hand von einem Nutzer betätigt werden kann. Alternativ kann aber auch ein Haken, ein Stift, ein Henkel, etc. als Betätigungselement zum Drehen bzw. Verschieben des zweiten Körpers dienen, vorzugsweise ein Element, das vom Benutzer einfach ergriffen werden kann.

Vorzugsweise weist auch der erste Körper ein geschlossenes Ende auf. Dabei handelt es sich bei dem geschlossenen Ende des ersten Körpers um das entfernte Ende, das zuerst in das Erdreich eingebracht wird. Durch ein geschlossenes entferntes Ende des ersten Körpers wird das Einführen des ersten Körpers in das Erdreich vereinfacht, indem es ein Eindringen von Erde in den zweiten Körper verhindert. Nach einer bevorzugten Ausführungsform ist das geschlossene Ende des ersten Körpers mit einer Spitze, z.B. kegelförmig, ausgebildet. Dies erleichtert das Einführen bzw. Einbringen in das Erdreich, da sich die Spitze beim Ausüben von Druck in den Boden bohrt. Wenn auch der zweite Körper ein geschlossenes Ende aufweist, sind die beiden geschlossenen Enden des ersten und zweiten Körpers im zusammengebauten Zustand der Vorrichtung, d.h. wenn der zweite Körper in den ersten Körper eingeführt ist, aneinander angrenzend angeordnet. Die beiden geschlossenen Enden bilden somit im Verwendungszustand die entfernten Enden.

Vorteilhafterweise weist die Vorrichtung einen Deckel zum Verschließen der stirnseitigen nahen Enden des ersten Körpers und des zweiten Körpers auf, wenn der zweite Körper in den ersten Körper eingeführt ist. Ein Deckel verhindert das Eindringen von Schmutz in das Innere des zweiten Körpers und verhindert auch das Eindringen von Wasser in das Vertreibungsmittel und damit möglicherweise eine Minderung der Wirksamkeit des Vertreibungsmittels. Außerdem kann bei geeigneter Gestaltung des Deckels dieser dazu beitrage, den Wühltiervertreiber wieder zu lokalisieren, wenn er eine gewisse Zeit in der Erde (zwischen Pflanzen, z.B.) war. Damit der Deckel zuverlässig an dem ersten und zweiten Körper angebracht werden kann, weisen der Deckel und der zweite Körper vorzugsweise Gewinde auf, z.B. weist der Deckel ein Innengewinde auf und die Mantelfläche des ersten Körpers an dem stirnseitigen nahen Ende, das von dem Deckel verschlossenen wird, weist ein Außengewinde auf zum Aufschrauben des Deckels auf den ersten Körper. Alternativ kann der Deckel aber auch über einen Presssitz oder über geeignete Befestigungsmittel, wie beispielsweise Schrauben, Nieten, Bolzen, Klemmen, Haken, etc. an dem ersten Körper befestigt werden.

Nach einer bevorzugten Ausführungsform weist der Deckel wenigsten ein Loch (im Folgenden: Deckelloch) auf. Das Deckelloch stellt im montierten Zustand von Vorrichtung und Deckel eine Verbindung zwischen einer erdnahen Umgebung der Vorrichtung und dem Inneren des zweiten Körpers her. Durch das Deckelloch können die Duftstoffe des Vergrämmittels nicht nur in das Erdreich austreten, sondern auch in die über der Erdoberfläche liegenden Bereiche in der Umgebung der Vorrichtung. Dadurch können auch Tiere, die nicht im Erdreich, sondern erdnah leben, wie beispielsweise Wildtiere, durch das Vergrämmittel vertrieben werden. Ist nur eine Vergrämung von Wildtieren gewünscht, kann das wenigstens eine Loch in dem zweiten Körper auch durch den ersten Körper verschlossen werden, so dass die Duftstoffe des Vergrämmittels ausschließlich über den Deckel in die Umgebung der Vorrichtung entweichen. In diesem Fall ist es auch denkbar, die Vorrichtung einteilig auszubilden, d.h. die Vorrichtung weist nur einen Körper auf, der zur Aufnahme des Vergrämmittels dient. Dieser eine Körper kann rohrförmig ausgebildet sein oder aber jede andere Form aufweisen, die zur Aufnahme eines Vergrämmittels geeignet ist, wie z.B. topfförmig. Im Übrigen weist der einteilige Körper die Merkmale des zweiten Körpers auf, wobei auf einen Positionierungsmechanismus verzichtet werden kann.

Um eine lange Lebensdauer des ersten und zweiten Körpers zu gewährleisten, sind diese vorzugsweise aus Kunststoff, wie beispielsweise einem Polymer, wie z.B. ABS, hergestellt. Alternativ ist aber auch Metall, wie rostfreier Stahl, Aluminium, etc. als Material für den ersten und/oder zweiten Köper denkbar oder Kombinationen aus Kunststoff und Metall. Wichtig ist, dass das Material des ersten Körpers witterungsbeständig und das Material des zweiten Körpers widerstandfähig gegen Inhaltsstoffe des Vertreibungsmittels ist.

Die erfindungsgemäße Vorrichtung kann unabhängig von der Bodenbeschaffenheit überall eingesetzt werden, wo Tiere, wie im Erdreich lebende Insekten oder Wühltiere, vor allem Maulwürfe, aber auch Wildtiere, ihr Unwesen treiben. Dazu wird zunächst der zweite Körper mit einem Vertreibungsmittel befüllt und mit dem entfernten Ende voran, das vorzugsweise geschlossen ist und das Vertreibungsmittel enthält, über das nahe Ende des ersten Körpers in den selbigen in axialer Richtung eingeführt. Entweder bereits beim Einführen des zweiten Körper in den ersten Körper oder in jedem Fall vor dem gemeinsamen Einführen beider Körper in das Erdreich wird sichergestellt, dass sich die Körper in der ersten Position befinden, so dass und das wenigstens eine Loch des zweiten Körpers geschlossen ist. Je nach Art des verwendeten Vertreibungsmittels ist es vorteilhaft, wenn z.B. mit Hilfe einer entsprechenden sichtbaren Positionierhilfe gewährleistet werden kann, dass sich der zweite Körper und der erste Körper während des gesamten Einschubvorgangs in einer Position zueinander befinden, in der das wenigstens eine Loch des ersten Körpers geschlossen ist, d.h. in der ersten Position. Anschließend wird der erste Körper mit dem entfernten Ende (das vorzugsweise geschlossen und/oder kegelförmig ausgebildet ist und weiter vorzugsweise ein Gewinde auf der Außenseite davon aufweist) voran in das Erdreich eingebracht, so dass das nahe Ende des ersten und oder zweiten Körpers etwas aus dem Erdreich herausragen (so dass gegebenenfalls ein Deckel an dem nahen Ende montiert werden kann). Ist die Vorrichtung ausreichend tief in das Erdreich eingebracht, wird der zweite Körper gegenüber dem ersten Körper vorzugsweise mit Hilfe des Betätigungsmechanismus in die zweite Position gebracht (oder in eine andere Position zur Dosierung des Vertreibungsmittels), so dass das wenigstens eine Loch des zweiten Körpers geöffnet wird und das Vertreibungsmittel oder dessen Duftstoffe darüber aus dem Inneren des zweiten Körpers in das Erdreich austreten kann. Sind sowohl in dem ersten als auch dem zweiten Körper Löcher vorgesehen, wird der zweite Körper in dem ersten Körper mittels des Betätigungsmechanismus derart verdreht bzw. verschoben, dass die Löcher in dem ersten Körper und dem zweiten Körper wenigstens teilweise fluchten und die Duftstoffe des Vergrämmittels aus dem Inneren des zweiten Körpers über die Löcher des ersten Körpers in das Erdreich austreten können. Der von dem Vertreibungsmittel ausgesandte Duft vertreibt Insekten und Wühltiere an der Stelle, an der die Vorrichtung in das Erdreich eingebracht ist, und in ihrer Umgebung. Bei Verwendung eines Deckels mit Deckellöchern können zusätzlich oder alternativ noch Wildtiere vertrieben werden.

Nach Ablauf einer gewissen Zeitspanne verströmt das Vertreibungsmittel nicht mehr ausreichend Duft zum Vertreiben der Tiere und muss ausgetauscht werden. Dazu wird der zweite Körper in dem ersten Körper aus der zweiten in die erste Position gedreht und aus dem ersten Körper herausgezogen. Das alte Vertreibungsmittel wird ggf. (sofern noch vorhanden, wie z.B. bei Granulat) dem zweiten Körper entnommen und ein neues Vertreibungsmittel wird in den zweiten Körper eingefüllt. Dann wird der zweite Körper wieder in den ersten Körper eingeführt, vorzugsweise in der ersten Position, und nach vollständigem Einführen in den zweiten Körper mittels des Positioniermechanismus in die zweite Position gedreht. Die Vorrichtung wird nur durch Austausch des Vertreibungsmittels wieder funktionsfähig, ohne dass eine neue Vorrichtung beschafft werden muss oder die Vorrichtung neu in das Erdreich eingebracht werden muss. Ferner, da ein Teil der Vorrichtung in der Erde verbleibt, muss kein neuer Ort identifiziert werden, an dem Tiere, wie z.B. Wühltiere, vertrieben werden sollen.

Alternativ zur Entnahme des zweiten Körper zum Austausch des Vertreibungsmittels kann dieser auch im in den ersten Körper eingeführten Zustand mit einem neuen Vertreibungsmittel befüllt werden. Dies erfordert nur das Verdrehen des zweiten Körpers zu der ersten Position vor dem Befüllen mit neuem Vertreibungsmittel und das Verdrehen des zweiten Körpers zu der zweiten Position nach dem Befüllen mit neuem Vertreibungsmittel.

Des Weiteren ist es denkbar, dem Nutzer der Vorrichtung durch eine Anzeige, z.B. an einem stirnseitigen Ende der Vorrichtung, eine Angabe über den Wirksamkeitszustand des Vertreibungsmittels zu geben. Z.B. kann eine rücksetzbare oder austauschbare farbige Markierung an einem stirnseitigen Ende der Vorrichtung, deren Farbe sich im Laufe der Zeit ändert, anzeigen, dass das Vertreibungsmittel an Wirksamkeit verliert und ausgetauscht werden sollte. Alternativ ist z.B. auch eine (einstellbare) Datumsanzeige für den Einfüllzeitpunkt des Vertreibungsmittels denkbar.

Die Erfindung wird nachfolgend beispielhaft anhand der beigefügten Zeichnungen beschrieben, in denen
- Fig. 1: eine Seitenansicht eines ersten erfindungsgemäßen Körpers zeigt,
- Fig. 2: eine Seitenansicht eines zweiten erfindungsgemäßen Körpers zeigt,
- Fig. 3: eine perspektivische Ansicht einer erfindungsgemäßen Vorrichtung zum Vertreiben von Wühltieren mit geschlossenen Löchern zeigt,
- Fig. 4: eine perspektivische Ansicht er erfindungsgemäßen Vorrichtung aus Fig. 3 mit geöffneten Löchern zeigt,
- Fig. 5: eine perspektivische Nahansicht eines entfernten Endes der erfindungsgemäßen Vorrichtung mit geschlossenen Löchern zeigt,
- Fig. 6: eine perspektivische Nahansicht des entfernten Endes der erfindungsgemäßen Vorrichtung aus Fig. 5 mit geöffneten Löchern zeigt,
- Fig. 7: eine Seitenansicht eines erfindungsgemäßen Deckels zeigt,
- Fig. 8: eine Draufsicht auf den erfindungsgemäßen Deckel aus Fig. 7 zeigt, und
- Fig. 9: eine perspektivische Seitenansicht der erfindungsgemäßen Vorrichtung mit Deckel mit Löchern zeigt.

Aspekte
1. Vorrichtung (100) zum Vertreiben von Tieren, enthaltend:
   einen ersten Körper (10) zum Einbringen in einen Boden,
   einen zweiten rohrförmigen Körper (20) zum Befüllen mit einem Vertreibungsmittel, der wenigstens ein Loch (21) in seiner Mantelfläche aufweist,
   wobei der zweite Körper (20) in den ersten Körper (10) einführbar ist,
   wobei der erste Körper (10) und der zweite Körper (20) einen Positionierungsmechanismus (30) aufweisen, der zumindest eine erste Position und zumindest eine zweite Position des ersten Körpers (10) relativ zu dem zweiten Körper (20) definiert, wenn der zweite Körper (20) in den ersten Körper (10) eingeführt ist,
   wobei bei der ersten Position der erste Körper (10) zu dem zweiten Körper (20) derart angeordnet ist, dass das Loch (21) geschlossen ist, und bei der zweiten Position der erste Körper (10) zu dem zweiten Körper (20) gegenüber der ersten Position derart radial verdreht und/oder axial verschoben ist, dass das Loch (21) geöffnet ist.
2. Vorrichtung (100) nach Aspekt 1, wobei der erste Körper (10) ein rohrförmiger Körper ist, der wenigstens ein erstes Loch (11) in seiner Mantelfläche aufweist, das Loch (21) in dem zweiten Körper ein zweites Loch (21) ist und bei der ersten Position der erste Körper (10) zu dem zweiten Körper (20) derart angeordnet ist, dass das erste Loch (10) und das zweite Loch (21) geschlossen sind, und bei der zweiten Position der erste Körper (10) zu dem zweiten Körper (20) gegenüber der ersten Position derart radial verdreht und/oder axial verschoben ist, dass das erste Loch (10) und das zweite Loch (21) fluchten.
3. Vorrichtung (100) nach Aspekt 2, enthaltend mehrere erste Löcher (11) und mehrere zweite Löcher (21).
4. Vorrichtung (100) nach einem der vorhergehenden Aspekte, wobei der Positionierungsmechanismus (30) mindestens an einem jeweiligen Ende (12, 13, 22, 23) des ersten Körpers (10) und des zweiten Körpers (20) angeordnet ist.
5. Vorrichtung (100) nach Aspekt 4, wobei der Positionierungsmechanismus (30) einen Vorsprung (31) an einer Innenseite der Mantelfläche des ersten Körpers (10) und eine zu dem jeweiligen Ende offene Nut (32) in der Mantelfläche des zweiten Körpers (20) aufweist.
6. Vorrichtung (100) nach Aspekt 5, wobei der Vorsprung (31) an der Innenseite der Mantelfläche des ersten Körpers (31) in der ersten Position derart in die Nut (32) eingreift, dass der erste Körper (10) zu dem zweiten Körper (20) axial verschiebbar ist, und in der zweiten Position derart in die Nut (32) eingreift, dass der erste Körper (10) zu dem zweiten Körper (20) nicht axial verschiebbar ist.
7. Vorrichtung (100) nach Aspekt 6, wobei die Nut (32) L-förmig ist.
8. Vorrichtung (100) nach einem der Aspekte 2 bis 7, wobei der zweite Körper (20) ein geschlossenes entferntes Ende (23) aufweist und das wenigstens eine zweite Loch (21) zu dem geschlossenen Ende (23) des zweiten Körpers (20) beabstandet ist, so dass der zweite Körper (20) einen Bereich zum Aufnehmen von Vertreibungsmittel aufweist, der kein Loch aufweist.
9. Vorrichtung (100) nach einem der vorhergehenden Aspekte, wobei der zweite Körper (20) ein Betätigungselement (24) zum Drehen des zweiten Körpers (20) in dem ersten Körper (10) aufweist.
10. Vorrichtung (100) nach Aspekt 9, wobei das Betätigungselement (24) ein Steg ist, der sich quer über ein stirnseitiges Ende des zweiten Körpers (20) erstreckt.
11. Vorrichtung (100) nach einem der vorhergehenden Aspekte, wobei der erste Körper (10) ein geschlossenes entferntes Ende (13) aufweist.
12. Vorrichtung (100) nach Aspekt 11, wenn rückbezogen auf Aspekt 8, wobei das geschlossene entfernte Ende (13) des ersten Körpers (10) und das geschlossene entfernte Ende (23) des zweiten Körpers (20) aneinander angrenzend angeordnet sind, wenn der zweite Körper (20) in den ersten Körper (10) eingeführt ist.
13. Vorrichtung (100) nach Aspekt 11 oder 12, wobei das geschlossene entfernte Ende (13) des ersten Körpers (10) kegelförmig ausgebildet ist.
14. Vorrichtung (100) nach einem der vorhergehenden Aspekte, ferner enthaltend einen Deckel (40) zum Verschließen eines jeweiligen stirnseitigen nahen Endes (12, 22) des ersten Körpers (10) und des zweiten Körpers (20), wenn der zweite Körper (20) in den ersten Körper (10) eingeführt ist.
15. Vorrichtung (100) nach Aspekt 14, wobei der Deckel (40) ein Innengewinde aufweist und die Mantelfläche des ersten Körpers (10) an dem Ende, das von dem Deckel (40) verschlossenen wird, ein Außengewinde (12) aufweist zum Aufschrauben des Deckels (40) auf den ersten Körper (10).
16. Vorrichtung (100) nach Aspekt 14 oder 15, wobei der Deckel (40) wenigstens ein Deckelloch (43) aufweist, das im montierten Zustand eine Verbindung zwischen einer erdnahen Umgebung der Vorrichtung (100) und dem Inneren des zweiten Körpers (20) herstellt.
17. Vorrichtung (100) nach einem der vorhergehenden Aspekte, wobei weitere Positionen des ersten Körpers (10) zu dem zweiten Körper (20), die zwischen der ersten Position und der zweiten Position liegen, über den Positionierungsmechanismus (30) definiert werden.
18. Vorrichtung (100) nach einem der vorhergehenden Aspekte, wobei der erste Körper (10) und der zweite Körper (20) aus einem Polymermaterial hergestellt sind.

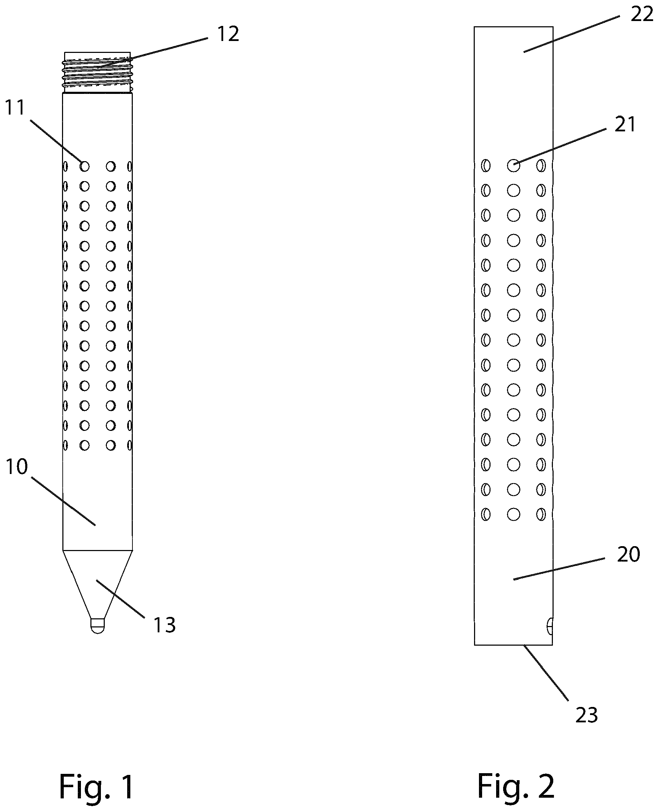

Fig. 1 zeigt einen ersten Körper 10 in Übereinstimmung mit der vorliegenden Erfindung. Der erste Körper 10 weist eine lang gestreckte Rohrform auf. Der erste Körper 10 ist somit kreiszylindrisch. In der Mantelfläche des ersten Körpers 10 sind eine Vielzahl von ersten Löchern 11 eingebracht, die eine Verbindung von einer Außenfläche des rohrförmigen ersten Körpers 10 zu einer Innenfläche des rohrförmigen ersten Körpers 10 herstellen. Die ersten Löcher 11 in der Mantelfläche des ersten Körpers 10 verlaufen in sich in Längsrichtung des ersten Körpers 10 erstreckenden Reihen bzw. Spalten von einem Ende des ersten Körpers 10 zu dem anderen Ende des ersten Körpers 10. Wie in Fig. 1 gezeigt ist, sind die ersten Löcher 11 zu den jeweiligen Enden 12, 13 des ersten Körpers 10 beabstandet. Die Mantelfläche des ersten Körpers 10 enthält weiter Bereiche, in denen keine Löcher 11 vorgesehen sind.

Der erste Körper 10 weist ein offenes nahes Ende 12 und ein geschlossenes entferntes Ende 13 auf. Das nahe Ende 12 weist ein Gewinde auf der Außenseite der Mantelfläche des ersten Körpers 10 auf. Das entfernte Ende 13 ist als Kegel ausgebildet und an der Spitze des Kegels ist ein stiftähnlicher Vorsprung vorgesehen.

Fig. 2 zeigt einen zweiten Körper 20 in Übereinstimmung mit der vorliegenden Erfindung. Der zweite Körper 20 weist eine lang gestreckte Rohrform auf. Der zweite Körper 20 ist ebenso wie der erste Körper 10 kreiszylindrisch. In die Mantelfläche des zweiten Körpers 20 sind eine Vielzahl von zweiten Löchern 21 eingebracht, die eine Verbindung von einer Au-βenfläche des rohrförmigen zweiten Körpers 20 zu einer Innenfläche des rohrförmigen zweiten Körpers 20 herstellen. Wie bei dem ersten Körper 10 in Fig. 1, verlaufen die zweiten Löcher 21 in der Mantelfläche des zweiten Körpers 20 in sich in Längsrichtung des zweiten Körpers 10 erstreckenden Reihen bzw. Spalten von einem Ende des zweiten Körpers 20 zu dem anderen Ende des zweiten Körpers 20. Wie in Fig. 2 gezeigt ist, sind die zweiten Löcher 21 zu den jeweiligen Enden 22, 23 des zweiten Körpers 20 beabstandet. Die Mantelfläche des zweiten Körpers 20 enthält weiter Bereiche, in denen keine Löcher 21 vorgesehen sind.

Der zweite Körper 20 weist ein offenes nahes Ende 22 und ein geschlossenes entferntes Ende 23 auf. Das entfernte Ende 23 weist eine Platte (nicht gezeigt in Fig. 2) auf, die das Ende des zweiten Körpers 20 in einer Ebene senkrecht zu der Längsachse des zweiten Körpers 20 verschließt.

Die Anzahl der ersten Löcher 11 in dem ersten Körper 10 ist gleich der Anzahl der zweiten Löcher 21 in dem zweiten Körper 20. Auch die Anordnung der ersten Löcher 11 in Reihen bzw. Spalten von dem nahen Ende 12 zu dem entfernten Ende 13 des ersten Körpers 10 entspricht der Anordnung der zweiten Löcher 21 in Reihen bzw. Spalten von dem nahen Ende 22 zu dem entfernten Ende 23 des zweiten Körpers 20. Die ersten Löcher 11 und die zweiten Löcher 21 verlaufen in gleichmäßig beabstandeten Reihen bzw. Spalten über den gesamten Umfang des ersten Körpers 10 bzw. des zweiten Körpers 20. Insgesamt weist eine Spalte 15 Löcher auf.

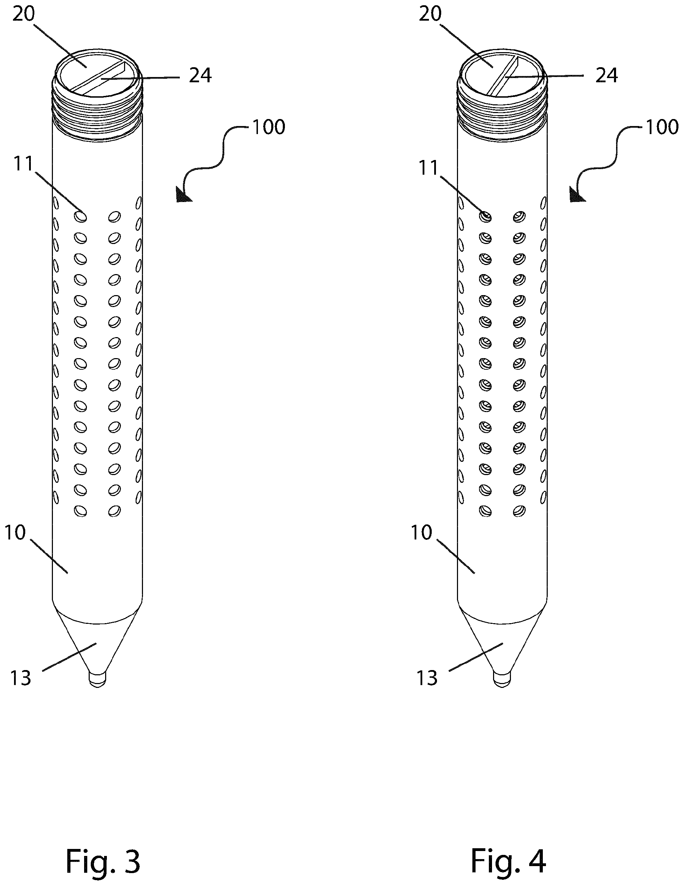

Fig. 3 ist eine perspektivische Ansicht einer erfindungsgemäßen Vorrichtung 100 zum Vertreiben bzw. Vergrämen von Wühltieren, wie beispielsweise Maulwürfen. In Fig. 3 ist der zweite Körper 20 in den ersten Körper 10 eingeführt und die zweiten Löcher 21 (nicht gezeigt in Fig. 3) des zweiten Körpers 20 sind gegenüber den ersten Löchern 11 des ersten Körpers 10 derart radial verdreht und/oder axial verschoben, dass die ersten Löcher 11 des ersten Körpers 10 von der Mantelfläche des zweiten Körpers 20, die keine Öffnungen bzw. Löcher enthält, bzw. die zweiten Löcher 21 des zweiten Körpers 20 von der Mantelfläche des ersten Körpers 10, die keine Öffnungen bzw. Löcher enthält, verdeckt und damit verschlossen sind. Bei dem in Fig. 3 gezeigten Zustand der Vorrichtung 100 handelt es sich um die erste Position des zweiten Körpers 20 zu dem ersten Körper 10.

Wie in Fig. 3 gezeigt ist, weist der zweite Körper 20 an seinem nahen Ende 22 ein Betätigungselement 24 in Form eines Stegs auf, der ein Drehen des zweiten Körpers 20 per Hand ermöglicht. Der Steg kann mit den Fingern ergriffen werden und der zweite Körper 20 kann relativ zu dem ersten Körper 10 in diesem gedreht werden.

Statt einem Verdrehen der Körper 10, 20 zueinander ist es auch denkbar, die gleiche Wirkung durch ein axiales Verschieben der Körper 10, 20 zueinander oder durch eine kombinierte Verdreh- und Verschiebebewegung zu erzielen. Dazu müssen die Löcher 11, 21 auf den Mantelflächen der Körper 10, 20 in entsprechenden Bereichen angeordnet sein.

In Fig. 4 ist die perspektivische Ansicht der erfindungsgemäßen Vorrichtung aus Fig. 3 in einem Zustand gezeigt, bei dem die zweiten Löcher 21 des zweiten Körpers 20 gegenüber den ersten Löchern 11 des ersten Körpers 10 derart verdreht bzw. verschoben sind, dass sie sich vollständig überlagern und damit vollständig geöffnet sind. Bei dem in Fig. 4 gezeigten Zustand der Vorrichtung 100 handelt es sich um die zweite Position des zweiten Körpers 20 zu dem ersten Körper 10.

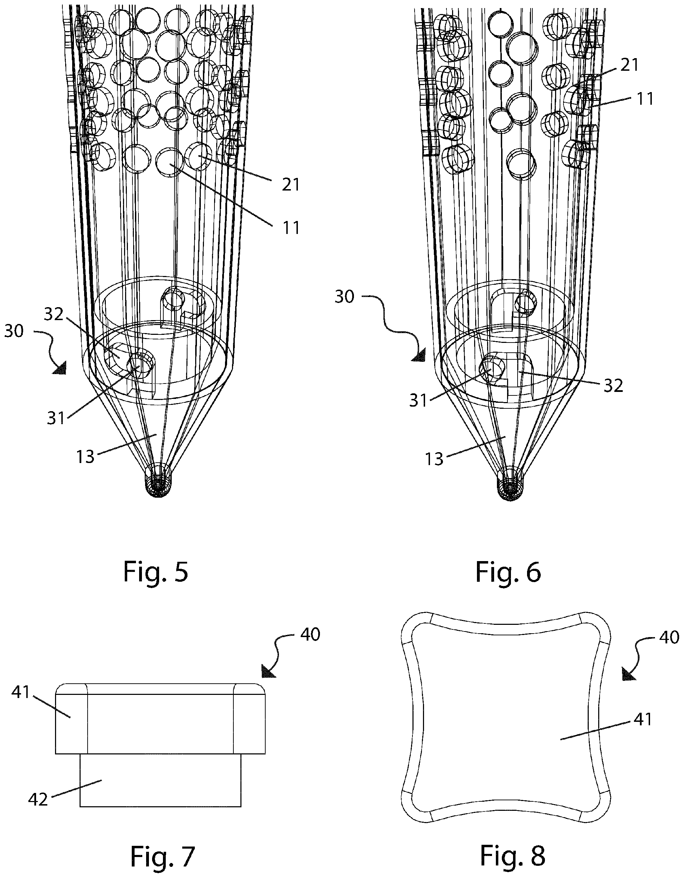

Fig. 5 und Fig. 6 zeigen perspektivische Nahansichten der erfindungsgemäßen Vorrichtung 100. Wie in Fig. 5 und Fog. 6 gezeigt ist, weist die Vorrichtung 100 einen Positionierungsmechanismus 30 auf. Der Positionierungsmechanismus 30 ist an einem entfernten Ende des Körpers 10 und des Körpers 20 vorgesehen und ist zweiteilig ausgebildet. Ein erster Teil des Positionierungsmechanismus 30 wird durch einen stiftähnlichen Vorsprung 31 gebildet, der an einer Innenfläche des ersten Körpers 10 angebracht ist. Der zweite Teil des Positionierungsmechanismus 30 wird durch eine L-förmigen Nut 32 gebildet, die zu dem entfernten Ende des Körpers 20 offen ist. Der Positionierungsmechanismus 30 definiert die oben beschriebene erste und zweite Position zwischen ersten und zweitem Körper 10, 20.

In Fig. 5 ist die erste Position des zweiten Körpers 20 zu dem ersten Körper 10 gezeigt. Dabei befindet sich der Vorsprung 31 am Ende des ersten Schenkels der L-förmigen Nut 32 und die ersten bzw. zweiten Löcher 11, 21 sind durch die jeweilige Mantelfläche des anderen Körpers aus den Körpern 10, 20 verschlossen.

In Fig. 6 ist die zweite Position des zweiten Körpers 20 zu dem ersten Körper 10 gezeigt. Dabei befindet sich der Vorsprung 31 am Ende des zweiten Schenkels der L-förmigen Nut 32 und die ersten bzw. zweiten Löcher 11, 21 liegen derart übereinander, dass sie miteinander fluchten und eine Verbindung von dem Inneren des zweiten Körpers 20 zu der Außenseite des ersten Körpers 10 herstellen.

In Fig. 7 ist eine Seitenansicht eines erfindungsgemäßen Deckels 40 gezeigt. Der Deckel 40 weist einen Betätigungsteil 41 und einen Verschlussteil 42 auf. Der Betätigungsteil 41 weist insgesamt größere Abmaße als der Verschlussteil 42 auf. Zumindest in dem Verschlussteil 42 ist ein Gewinde (nicht gezeigt) vorgesehen. Der Betätigungsteil 41 weist, wie in der Draufsicht in Fig. 8 gezeigt, einen nahezu quadratischen Querschnitt auf, dessen Seiten jedoch zur Verbesserung der Betätigung per Hand leicht zu der Mitte des quadratischen Querschnitts gebogen sind.

Bei Verwendung der Vorrichtung 100 wird zunächst das entfernte Ende 23 des zweiten Körpers 20 mit einem zur Vertreibung von Wühltieren geeigneten Vertreibungsmittel gefüllt. Um zu vermeiden, dass das Vertreibungsmittel während der Befüllung durch die zweiten Löcher 21 zweiten Körpers 20 austritt, wird bei Verwendung eines feinen granulatförmigen, gelartigen oder flüssigen Vertreibungsmittels das Vertreibungsmittel bis maximal unterhalb der zweiten Löcher 21, die sich dem entfernten Ende 23 am nächsten befinden, in den zweiten Körper 20 eingefüllt. Bei Verwendung eines groben granulatförmigen oder Feststoff-Vertreibungsmittels kann sich das Vertreibungsmittel auch auf Höhe der Löcher 21 befinden, da dabei keine Gefahr besteht, dass dieses während der Befüllung durch die zweiten Löcher 21 des zweiten Körpers 20 austritt.

Nach Befüllung des zweiten Körpers 20 mit Vertreibungsmittel wird der zweite Körper 20 mit dem entfernten Ende 23 voran in den ersten Körper 10 über dessen nahes Ende 12 eingeführt. Während des Einführens des zweiten Körpers 20 in den ersten Körper 10 wird der zweite Körper 20 durch Betätigen des Stegs 24 per Hand von einem Nutzer in die erste Position gedreht, so dass bei Erreichen der maximalen Einführtiefe des Körpers 20 in den Körper 10 der Vorsprung 31 in den ersten Schenkel der L-förmigen Nut 32 eingreift. In dieser ersten Position von zweitem Körper 20 zu erstem Körper 10 werden die zweiten Löcher 21 des zweiten Körpers 20 von der Mantelfläche des ersten Körpers 10, die sich zwischen den ersten Löchern 11 erstreckt, verdeckt. Ebenso werden die ersten Löcher 11 des ersten Körpers 10 von der Mantelfläche des zweiten Körpers 20, die sich zwischen den zweiten Löchern 21 erstreckt, verdeckt. Somit kann das Vertreibungsmittel in der ersten Position nicht durch die zweiten bzw. ersten Löcher 21 bzw. 11 aus dem Inneren des zweiten Körpers 20 zu der Außenseite des ersten Körpers 10 austreten.

Die Vorrichtung 100 wird nun in dieser ersten Position von zweitem Körper 20 zu erstem Körper 10 in ein Erdreich in einem Garten, einem Feld oder irgendeiner anderen Grünfläche mit dem entfernten geschlossenen, kegelförmigen Ende 13 voran eingebracht. Die Vorrichtung 100 wird so weit in das Erdreich eingeführt, das nur noch die nahen Enden 12, 22 aus dem Erdreich herausragen.

Nach Erreichen der Einführtiefe der Vorrichtung 100 in das Erdreich, wird der zweite Körper 20, je nach Verlauf der L-förmigen Nut 32 im oder gegen den Uhrzeigersinn so weit gedreht, bis der Vorsprung 31 das Ende des zweiten Schenkels der L-förmigen Nut 32 erreicht und eine weitere Drehung des zweiten Körpers 20 nicht mehr möglich ist. Durch Erreichen des Endes des zweiten Schenkels der L-förmigen Nut 32 wird der zweite Körper 20 gegenüber dem ersten Körper 10 in axialer Richtung arretiert. Die ersten bzw. zweiten Löcher 11, 21 des ersten bzw. zweiten Körpers 10, 20 fluchten in dieser Stellung des zweiten Körpers 20 zu dem ersten Körper 10 und stellen eine Verbindung von dem Inneren des zweiten Körpers 20 zu der Außenseite des ersten Körpers 10 her, so dass das Vertreibungsmittel aus dem zweiten Körper 20 durch die zweiten Löcher 21 und die ersten Löcher 11 zu der Außenseite des ersten Körpers 10 austreten und damit in das Erdreich gelangen kann.

Zur Vermeidung, dass Schmutz und Wasser in den zweiten Körper 20 und damit auch in das Vertreibungsmittel eindringen, wird das nahe Ende 12 des ersten Körpers 10, das mit einem Gewinde versehen ist, mit dem Deckel 40 durch Aufschrauben des Deckels 40 auf das Gewinde an dem nahen Ende 12 des ersten Körpers 10 verschlossen.

Nachdem eine gewisse Zeit verstrichen ist oder durch Anzeige, dass das Vertreibungsmittel aufgebraucht ist oder dass die Wirkung des Vertreibungsmittels nachlässt, muss das Vertreibungsmittel ausgetauscht werden. Dazu ist es entweder möglich, den zweiten Körper 20 dem ersten Körper 10 zu entnehmen, ein neues Vertreibungsmittel einzufüllen und den zweiten Körper 20 anschließend erneut in den ersten Körper 10 einzusetzen. Alternativ, insbesondere bei Vertreibungsmitteln, die sich im Laufe der Zeit verbrauchen, ist es auch möglich, dass Vertreibungsmittel unmittelbar in den zweiten Körper 20 einzufüllen, während dieser in den ersten Körper 10 eingeführt bleibt und damit in dem Erdreich verbleibt.

Wird der zweite Körper 20 mit Vertreibungsmittel befüllt, indem er dem ersten Körper 10 entnommen wird, ist es erforderlich, dass nach Lösen und Entfernen des Deckels 40 der zweite Körper 20 zur Entnahme des ersten Körpers 20 aus dem ersten Körper 10 zunächst derart gegenüber dem ersten Körper 10 verdreht wird, dass der Vorsprung 31 des Positionierungsmechanismus 30 wieder in das Ende des ersten Schenkels der L-förmigen Nut eingreift. Sodann kann der zweite Körper 20 durch Herausziehen aus dem ersten Körper 10 diesem entnommen werden. Der zweite Körper 20 wird mit neuem Vertreibungsmittel befüllt und anschließend auf die oben beschriebene Art und Weise, d.h. unter Berücksichtigung der ersten und zweiten Position des zweiten Körpers 20 zu erstem Körper 10, in den ersten Körper 10 eingeführt und mit dem Deckel 40 verschlossen. Da der Nutzer in der Situation, in der sich der erste Körper in dem Erdreich befindet, die Position des Vorsprungs 31 nur schwer erkennen kann, kann diese an der Stirnfläche des nahen Endes 12 mittels einer Markierung (farbig, Vertiefung, etc.) angedeutet sein.

Wird der zweite Körper 20 mit Vertreibungsmittel befüllt, indem er in dem ersten Körper 10 verbleibt, ist es zur Befüllung des zweiten Körpers 20 mit Vertreibungsmittel lediglich erforderlich nach Lösen und Entfernen des Deckels 40 die ersten bzw. zweiten Löcher 11, 21 des ersten bzw. zweiten Körpers 10, 20 durch Drehen des zweiten Körpers 20 in dem ersten Körper 10 von der zweiten Position in die erste Position zu verschließen, um ein vorzeitiges Austreten des Vertreibungsmittels während des Einfüllens des selbigen zu verhindern. Nach vollständigem Einfüllen des Vertreibungsmittels in den zweiten Körper 20, wird dieser sodann wieder zurück in die zweite Position gedreht.

Die Vorrichtung 100 weist bevorzugt eine Gesamtlänge von entferntem Ende 13 zu nahem Ende 12 des ersten Körpers von ungefähr 350mm auf, vorzugsweise 250 bis 349 mm, weiter vorzugsweise 280mm bis 330 mm. Der Durchmesser des ersten Körpers beträgt 42 mm, vorzugsweise 35 bis 41 mm, der Durchmesser des zweiten Körpers beträgt 38 mm, vorzugsweise 31 bis 37 mm. Dies stellt eine Eindringtiefe in das Erdreich sicher, die zur Vertreibung von sich oberflächennah aufhaltenden Wühltieren bevorzugt ist. Die Wandstärke des ersten Körpers beträgt etwa 2 mm oder jedes andere geeignete Maß. Allgemein sind für die Vorrichtung sämtliche andere Maße denkbar, abhängig von Material, Fertigungsverfahren oder Anwendungsfall.

Die oben beschriebene Ausführungsform der erfindungsgemäßen Vorrichtung 100 ist nur eine von zahlreichen anderen möglichen Ausführungsformen der erfindungsgemäßen Vorrichtung 100. Es ist beispielsweise möglich, dass der erste und der zweite Körper 10, 20 keine Rohrform mit kreisrundem Querschnitt aufweisen, sondern eine Rohrform mit einem ovalen, rechteckigen, quadratischen, etc. Querschnitt. Entscheidend ist lediglich, dass die Formen des ersten und zweiten Körpers 10, 20 durch eine radiale Verdrehung und/oder eine axiale Verschiebung gegeneinander ein Verschließen bzw. Öffnen der ersten bzw. zweiten Löcher 11, 21 in dem ersten und zweiten Körper 10, 20 ermöglichen. Des Weiteren ist es nicht zwingend erforderlich, dass das entfernte geschlossene Ende 13 des ersten Körpers 10 eine Kegelform aufweist und das entfernte geschlossene Ende 23 des zweiten Körpers 20 eine Plattenform aufweist. Vielmehr können sowohl das entfernte geschlossene Ende 13 als auch das entfernte geschlossene Ende 23 jegliche andere Formen, wie eine Plattenform, Kegelform, Halbkugelform, etc. annehmen. Ferner ist es denkbar, dass sich die ersten Löcher 11 und die zweiten Löcher 21 in ungleichmäßig beanstandeten Reihen und/oder Spalten über den gesamten oder nur einen Teil des Umfangs des Körpers 10 und des Körpers 20 erstrecken. Darüber hinaus ist es denkbar, dass der Körper 10 eine andere Anzahl von Löchern als der Körper 20 aufweist und/oder dass sich die Anordnung der ersten Löcher 11 und der zweiten Löcher 21 in dem jeweiligen Körper 10 bzw. 20 unterscheidet.

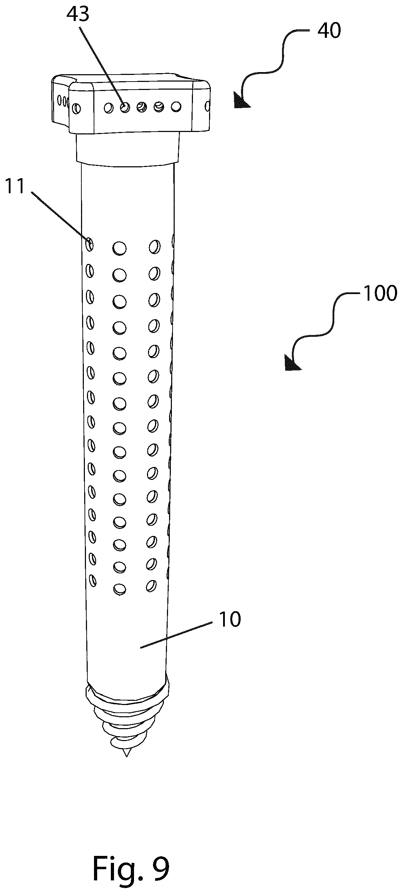

Fig. 9 zeigt die erfindungsgemäße Vorrichtung mit einer alternativen Ausführungsform des Deckels 40. Der Deckel 40 aus Fig. 9 entspricht im Wesentlichen dem Deckel 40 aus den Fig. 7 und 8. Im Unterscheid zu dem Deckel aus Fig. 7 und 8 weist der Deckel 40 aus Fig. 9 jedoch eine Vielzahl an Löchern 43 (Deckellöcher 43) auf. Die Deckellöcher 43 sind entlang des Umfangs des Deckels 40 angeordnet. Dies hat den Vorteil, dass die Deckellöcher 43 nicht so leicht durch Schmutz oder Erdreich verschlossen werden können. Alternativ können die Deckellöcher aber auch an jeder anderen Stelle des Deckels 40, wie z.B. der Stirnfläche, angeordnet sein. Ferner ist es denkbar, auch nur wenige, z.B. zwei oder drei Deckellöcher 43, oder gar nur ein Deckelloch 43 in dem Deckel 40 vorzusehen.

Die Deckellöcher 43 stellen im in einem Erdreich montierten Zustand eine Verbindung von dem Inneren des Körpers 20 zu der oberhalb des Erdreichs liegenden Umgebung der Vorrichtung her. Dazu wird muss der Deckel im montierten Zustand aus dem Erdreich herausragen. So können Duftstoffe eines Vergrämmittels aus dem Inneren des zweiten Körpers 20 durch den Deckel 40 in die erdnahe Umgebung gelangen und zusätzlich zu einer Vertreibung von Insekten oder Wühltieren auch Wildtiere vertreiben. Alternativ ist auch bei geschlossenen Löcher 11, 21 oder einer einteiligen Ausführung der Vorrichtung 100 nur eine Vertreibung von Wildtieren über eine Deckel 40 mit Deckellöchern 43 denkbar.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 10: erster Körper
- 11: erstes Loch
- 12: nahes Ende des ersten Körpers
- 13: entferntes Ende des ersten Körpers
- 20: zweiter Körper
- 21: zweites Loch
- 22: nahes Ende des zweiten Körpers
- 23: entferntes Ende des zweiten Körpers
- 24: Betätigungselement, Steg
- 30: Positionierungsmechanismus
- 31: Vorsprung
- 32: Nut
- 40: Deckel
- 41: Betätigungsteil
- 42: Verschlussteil
- 43: Deckelloch

## Patentansprüche

1. Vorrichtung (100) zum Vertreiben von Tieren, enthaltend:
einen ersten Körper (10) zum Einbringen in einen Boden,
einen zweiten rohrförmigen Körper (20) zum Befüllen mit einem Vertreibungsmittel, der wenigstens ein Loch (21) in seiner Mantelfläche aufweist,
wobei der zweite Körper (20) in den ersten Körper (10) einführbar ist,
wobei der erste Körper (10) und der zweite Körper (20) einen Positionierungsmechanismus (30) aufweisen, der zumindest eine erste Position und zumindest eine zweite Position des ersten Körpers (10) relativ zu dem zweiten Körper (20) definiert, wenn der zweite Körper (20) in den ersten Körper (10) eingeführt ist,
**dadurch gekennzeichnet, dass** bei der ersten Position der erste Körper (10) zu dem zweiten Körper (20) derart angeordnet ist, dass das Loch (21) geschlossen ist, und bei der zweiten Position der erste Körper (10) zu dem zweiten Körper (20) gegenüber der ersten Position derart radial verdreht und/oder axial verschoben ist, dass das Loch (21) geöffnet ist.

2. Vorrichtung (100) nach Anspruch 1, wobei der erste Körper (10) ein rohrförmiger Körper ist, der wenigstens ein erstes Loch (11) in seiner Mantelfläche aufweist, das Loch (21) in dem zweiten Körper ein zweites Loch (21) ist und bei der ersten Position der erste Körper (10) zu dem zweiten Körper (20) derart angeordnet ist, dass das erste Loch (10) und das zweite Loch (21) geschlossen sind, und bei der zweiten Position der erste Körper (10) zu dem zweiten Körper (20) gegenüber der ersten Position derart radial verdreht und/oder axial verschoben ist, dass das erste Loch (10) und das zweite Loch (21) fluchten.

3. Vorrichtung (100) nach Anspruch 2, enthaltend mehrere erste Löcher (11) und mehrere zweite Löcher (21).

4. Vorrichtung (100) nach einem der vorhergehenden Ansprüche, wobei der Positionierungsmechanismus (30) mindestens an einem jeweiligen Ende (12, 13, 22, 23) des ersten Körpers (10) und des zweiten Körpers (20) angeordnet ist.

5. Vorrichtung (100) nach Anspruch 4, wobei der Positionierungsmechanismus (30) einen Vorsprung (31) an einer Innenseite der Mantelfläche des ersten Körpers (10) und eine zu dem jeweiligen Ende offene Nut (32) in der Mantelfläche des zweiten Körpers (20) aufweist.

6. Vorrichtung (100) nach Anspruch 5, wobei der Vorsprung (31) an der Innenseite der Mantelfläche des ersten Körpers (31) in der ersten Position derart in die Nut (32) eingreift, dass der erste Körper (10) zu dem zweiten Körper (20) axial verschiebbar ist, und in der zweiten Position derart in die Nut (32) eingreift, dass der erste Körper (10) zu dem zweiten Körper (20) nicht axial verschiebbar ist.

7. Vorrichtung (100) nach Anspruch 6, wobei die Nut (32) L-förmig ist.

8. Vorrichtung (100) nach einem der Ansprüche 2 bis 7, wobei der zweite Körper (20) ein geschlossenes entferntes Ende (23) aufweist und das wenigstens eine zweite Loch (21) zu dem geschlossenen Ende (23) des zweiten Körpers (20) beabstandet ist, so dass der zweite Körper (20) einen Bereich zum Aufnehmen von Vertreibungsmittel aufweist, der kein Loch aufweist.

9. Vorrichtung (100) nach einem der vorhergehenden Ansprüche, wobei der zweite Körper (20) ein Betätigungselement (24) zum Drehen des zweiten Körpers (20) in dem ersten Körper (10) aufweist, wobei das Betätigungselement (24) vorzugsweise ein Steg ist, der sich quer über ein stirnseitiges Ende des zweiten Körpers (20) erstreckt.

10. Vorrichtung (100) nach einem der vorhergehenden Ansprüche, wobei der erste Körper (10) ein geschlossenes entferntes Ende (13) aufweist, wobei das geschlossene entfernte Ende (13) des ersten Körpers (10) vorzugsweise kegelförmig ausgebildet ist.

11. Vorrichtung (100) nach Anspruch 10, wenn rückbezogen auf Anspruch 8, wobei das geschlossene entfernte Ende (13) des ersten Körpers (10) und das geschlossene entfernte Ende (23) des zweiten Körpers (20) aneinander angrenzend angeordnet sind, wenn der zweite Körper (20) in den ersten Körper (10) eingeführt ist.

12. Vorrichtung (100) nach einem der vorhergehenden Ansprüche, ferner enthaltend einen Deckel (40) zum Verschließen eines jeweiligen stirnseitigen nahen Endes (12, 22) des ersten Körpers (10) und des zweiten Körpers (20), wenn der zweite Körper (20) in den ersten Körper (10) eingeführt ist.

13. Vorrichtung (100) nach Anspruch 12, wobei der Deckel (40) ein Innengewinde aufweist und die Mantelfläche des ersten Körpers (10) an dem Ende, das von dem Deckel (40) verschlossenen wird, ein Außengewinde (12) aufweist zum Aufschrauben des Deckels (40) auf den ersten Körper (10) und/oder wobei der Deckel (40) wenigstens ein Deckelloch (43) aufweist, das im montierten Zustand eine Verbindung zwischen einer erdnahen Umgebung der Vorrichtung (100) und dem Inneren des zweiten Körpers (20) herstellt.

14. Vorrichtung (100) nach einem der vorhergehenden Ansprüche, wobei weitere Positionen des ersten Körpers (10) zu dem zweiten Körper (20), die zwischen der ersten Position und der zweiten Position liegen, über den Positionierungsmechanismus (30) definiert werden.

15. Vorrichtung (100) nach einem der vorhergehenden Ansprüche, wobei der erste Körper (10) und der zweite Körper (20) aus einem Polymermaterial hergestellt sind.

## Claims

1. An apparatus (100) for expelling animals, comprising:
a first body (10) for being inserted into a ground,
a second tubular body (20) for filling with an expelling agent, the second tubular body (20) having at least one hole (21) in its circumferential surface,
wherein the second body (20) is insertable into the first body (10),
wherein the first body (10) and the second body (20) have a positioning mechanism (30) defining at least a first position and at least a second position of the first body (10) relative to the second body (20) when the second body (20) is inserted into the first body (10),
**characterized in that**,
in the first position, the first body (10) is arranged with respect to the second body (20) such that the hole (21) is closed, and, in the second position, the first body (10) is radially rotated and/or axially displaced with respect to the second body (20) compared to the first position such that the hole (21) is opened.

2. The apparatus (100) according to claim 1, wherein the first body (10) is a tubular body having at least one first hole (11) in its circumferential surface, the hole (21) in the second body is a second hole (21) and, in the first position, the first body (10) is arranged with respect to the second body (20) such that the first hole (11) and the second hole (21) are closed, and, in the second position, the first body (10) is radially rotated and/or axially displaced with respect to the second body (20) compared to the first position such that the first hole (11) and the second hole (21) are aligned.

3. The apparatus (100) according to claim 2, comprising a plurality of first holes (11) and a plurality of second holes (21).

4. The apparatus (100) according to any one of the preceding claims, wherein the positioning mechanism (30) is arranged at least at a respective end (12, 13, 22, 23) of the first body (10) and the second body (20).

5. The apparatus (100) according to claim 4, wherein the positioning mechanism (30) comprises a protrusion (31) on an inner side of the circumferential surface of the first body (10) and a groove (32) in the circumferential surface of the second body (20), the groove (32) being open towards the respective end.

6. The apparatus (100) according to claim 5, wherein, in the first position, the protrusion (31) on the inner side of the circumferential surface of the first body (31) engages the groove (32) such that the first body (10) is axially displaceable with respect to the second body (20), and, in the second position, engages the groove (32) such that the first body (10) is not axially displaceable with respect to the second body (20).

7. The apparatus (100) according to claim 6, wherein the groove (32) is L-shaped.

8. The apparatus (100) according to any one of claims 2 to 7, wherein the second body (20) has a closed distal end (23) and the at least one second hole (21) is spaced from the closed distal end (23) of the second body (20) such that the second body (20) has a portion for receiving expelling agent, the portion having no hole.

9. The apparatus (100) according to any one of the preceding claims, wherein the second body (20) has an actuating member (24) for rotating the second body (20) in the first body (10), wherein the actuating member (24) is preferably a web which extends transversely across a front end of the second body (20).

10. The apparatus (100) according to any one of the preceding claims, wherein the first body (10) has a closed distal end (13), wherein the closed distal end (13) of the first body (10) is preferably tapered.

11. The apparatus (100) according to claim 10, if dependent on claim 8, wherein the closed distal end (13) of the first body (10) and the closed distal end (23) of the second body (10) are arranged adjacent to each other when the second body (20) is inserted into the first body (10).

12. The apparatus (100) according to any one of the preceding claims, further comprising a lid (40) for closing a respective front proximal end (12, 22) of the first body (10) and the second body (20) when the second body (20) is inserted into the first body (10).

13. The apparatus (100) according to claim 12, wherein the lid (40) has a female thread and the circumferential surface of the first body (10) at the end closed by the lid (40) has a male thread for screwing the lid (40) onto the first body (10) and/or wherein the lid (40) has at least one lid hole (43) which, in the assembled state, provides a connection between a near-earth environment of the apparatus (100) and the interior of the second body (20).

14. The apparatus (100) according to any one of the preceding claims, wherein further positions of the first body (10) with respect to the second body (20), which are between the first position and the second position, are defined by the positioning mechanism (30).

15. The apparatus (100) according to any one of the preceding claims, wherein the first body (10) and the second body (20) are made from a polymer material.

## Revendications

1. Dispositif (100) pour repousser les animaux, comprenant :
un premier corps (10) destiné à être inséré dans un sol,
un deuxième corps (20) tubulaire à remplir d'un agent de déplacement, qui présente au moins un trou (21) dans sa surface latérale,
dans lequel le deuxième corps (20) est apte à être inséré dans le premier corps (10),
le premier corps (10) et le deuxième corps (20) ayant un mécanisme de positionnement (30) définissant au moins une première position et au moins une deuxième position du premier corps (10) par rapport au deuxième corps (20) lorsque le deuxième corps (20) est inséré dans le premier corps (10),
**caractérisé en ce que**
dans la première position, le premier corps (10) est agencé sur le deuxième corps (20) de telle manière que le trou (21) soit fermé, et dans la deuxième position, le premier corps (10) est tourné radialement et/ou déplacé axialement sur le deuxième corps (20) par rapport à la première position de telle manière que le trou (21) soit ouvert.

2. Dispositif (100) selon la revendication 1, dans lequel le premier corps (10) est un corps tubulaire ayant au moins un premier trou (11) dans sa surface latérale, le trou (21) dans le deuxième corps étant un deuxième trou (21), et dans la première position, le premier corps (10) est agencé sur le deuxième corps (20) de telle manière que le premier trou (10) et le deuxième trou (21) soient fermés, et dans la deuxième position, le premier corps (10) est tourné radialement et/ou déplacé axialement sur le deuxième corps (20) par rapport à la première position de telle manière que le premier trou (10) et le deuxième trou (21) soient alignés.

3. Dispositif (100) selon la revendication 2, comprenant une pluralité de premiers trous (11) et une pluralité de deuxièmes trous (21).

4. Dispositif (100) selon l'une des revendications précédentes, dans lequel le mécanisme de positionnement (30) est disposé au moins à une extrémité respective (12, 13, 22, 23) du premier corps (10) et du deuxième corps (20).

5. Dispositif (100) selon la revendication 4, dans lequel le mécanisme de positionnement (30) a une saillie (31) sur un côté intérieur de la surface latérale du premier corps (10) et une rainure (32) ouverte vers l'extrémité respective dans la surface latérale du deuxième corps (20).

6. Dispositif (100) selon la revendication 5, dans lequel la saillie (31) sur le côté intérieur de la surface latérale du premier corps (31) dans la première position s'engage dans la rainure (32) de telle manière que le premier corps (10) soit déplaçable axialement sur le deuxième corps (20), et dans la deuxième position s'engage dans la rainure (32) de telle manière que le premier corps (10) ne soit pas déplaçable axialement sur le deuxième corps (20).

7. Dispositif (100) selon la revendication 6, dans lequel la rainure (32) est en forme de L.

8. Dispositif (100) selon l'une des revendications 2 bis 7, dans lequel le deuxième corps (20) a une extrémité distale fermée (23) et l'au moins un deuxième trou (21) est espacé de l'extrémité fermée (23) du deuxième corps (20), de sorte que le deuxième corps (20) comporte une zone pour recevoir l'agent de déplacement, qui n'a pas de trou.

9. Dispositif (100) selon l'une des revendications précédentes, dans lequel le deuxième corps (20) comporte un élément d'actionnement (24) pour faire tourner le deuxième corps (20) dans le premier corps (10), l'élément d'actionnement (24) étant de préférence une bande s'étendant à travers une extrémité avant du deuxième corps (20).

10. Dispositif (100) selon l'une des revendications précédentes, dans lequel le premier corps (10) a une extrémité distale fermée (13), l'extrémité distale fermée (13) du premier corps (10) étant de préférence conçu en forme de cône.

11. Dispositif (100) selon la revendication 10, lorsqu'elle dépend de la revendication 8, dans lequel l'extrémité distale fermée (13) du premier corps (10) et l'extrémité distale fermée (23) du deuxième corps (20) sont situées adjacentes l'une à l'autre lorsque le deuxième corps (20) est inséré dans le premier corps (10).

12. Dispositif (100) selon l'une des revendications précédentes, comprenant en outre un couvercle (40) pour fermer une extrémité proximale respective (12, 22) du premier corps (10) et du deuxième corps (20) lorsque le deuxième corps (20) est inséré dans le premier corps (10).

13. Dispositif (100) selon la revendication 12, dans lequel le couvercle (40) a un filetage intérieur, et la surface latérale du premier corps (10) a un filetage extérieur (12) à l'extrémité qui est fermée par le couvercle (40) pour visser le couvercle (40) sur le premier corps (10), et/ou dans lequel le couvercle (40) présente au moins un trou de couvercle (43) qui, à l'état assemblé, forme une liaison entre un environnement proche de la terre du dispositif (100) et l'intérieur du deuxième corps (20).

14. Dispositif (100) selon l'une des revendications précédentes, dans lequel d'autres positions du premier corps (10) sur le deuxième corps (20), qui se situent entre la première position et la deuxième position, sont définies via le mécanisme de positionnement (30).

15. Dispositif (100) selon l'une des revendications précédentes, dans lequel le premier corps (10) et le deuxième corps (20) sont constitués d'un matériau polymère.
